# EUROPEAN PATENT APPLICATION

(11) **EP 3 231 278 A1**
(43) Date of publication of application: **18.10.2017**
(21) Application number: 17163761.4
(22) Date of filing: 30.03.2017
(51) Int. Cl.: A01K 1/015, A01K 13/00, A01K 31/04

(54) **A DUST BATH FOR POULTRY AND A METHOD FOR USING THE DUST BATH**

(30) Priority: 12.04.2016 NO 20160595
(71) Applicant: Bore, Bjarne Johannes, 4352 Kleppe (NO)
(72) Inventor: Bore, Bjarne Johannes, 4352 Kleppe (NO)
(74) Representative: Håmsø Patentbyrå AS

(57) **Abstract**

A dust bath (1) for poultry, the dust bath (1) comprising a pan (10) with a floor (11), a bordering surface (17, 18, 19, 20) projecting upwards from the border area of the floor (11), a roof (40) placed at a distance from the floor (11) of the dust bath (1) and a mat (70) placed on the floor (11) of the dust bath (1), the dust bath (1) being **characterized in** that:
- at least one portion of the floor (11) of the pan (10) has a slope relative to a horizontal axis (31); and
- at least one portion of the bordering surface (17, 18, 19, 20) projects outwards from the floor (11) of the pan (10) at an angle of between 10° and 70° relative to a horizontal plane.

A method for using a dust bath (1) in which substrate is filled into the dust bath (1) through an opening (41) in the roof (40) of the dust bath (1).

## Description

The invention generally relates to a dust bath for poultry and a method for using the dust bath. In particular, this invention relates to a dust bath for poultry, the dust bath including a pan with a floor and a bordering surface projecting upwards from the border area of the dust bath. The method relates to filling substrate into the dust bath.

Poultry, such as hens, need to have access to substrate to be stimulated to peck, kick and dust-bathe. The dust-bathing helps in maintaining the plumage, so that it is kept clean and free of parasites. Besides, the activities also contribute to increased employment of the poultry so that they have less time for destructive actions, such as feather-pecking. The substrate typically contains sand and/or pebbles that the poultry need in their gizzards and that they, as users of the dust bath, can get by pecking at the substrate.

In Norway, pursuant to the "Regulations on the keeping of chickens and turkeys", the access to dust baths is a requirement for furnished cages. The requirement for dust baths in furnished cages is normally met by the use of simple, square pans. A problem with the use of such pans is that the simple, open design makes the substrate, to which the poultry are to have access, quickly get kicked out of the pan. This leads to high substrate consumption and the poultry keeper having to spend much time on replenishing with new substrate.

From the Internet a number of types of open, flat-bottomed pans for use as dust baths are known. EP0970607A2 discloses a device for providing substrate for bird cages, wherein it is described that the floor of the cage is perforated and covered with substrate so that birds may dust-bathe.

The invention has for its object primarily to ensure that the dust bath will retain substrate better than known dust baths so that there is no need to replenish with substrate that often. In that way, the poultry keeper will experience lower consumption of substrate and less time spent on replenishing.

The object is achieved through the features that are specified in the description below and in the claims that follow.

The invention is defined by the independent claims. The dependent claims define advantageous embodiments of the invention.

The dust bath, according to the first aspect of the invention, includes a pan with a floor and a bordering surface projecting upwards from the border area of the floor. Further, the dust bath includes a roof placed at a distance from the floor of the dust bath, and a mat placed on the floor of the dust bath. The pan is formed in such a way that at least one portion of the floor of the pan has a slope relative to a horizontal axis, and at least one portion of the bordering surface projects outwards from the floor of the pan at an angle of between 10° and 70° relative to a horizontal plane. The bordering surface, the roof and the mat help to achieve the desired purpose: keeping the substrate in the dust bath. The bordering surface helps to retain the substrate by preventing poultry from kicking or pushing substrate beyond the border area of the floor. The roof provides a restriction on vertical substrate movement, which may occur when a hen is dust-bathing, for example. The mat may bind substrate, thereby making the substrate more difficult to kick away.

As mentioned above, the dust bath is formed in such a way that at least one portion of the floor of the pan has a slope relative to a horizontal axis. A slope in the floor has several advantages. A typical hen cage is usually formed with a slope in the hen-cage floor, and usually with opposite slopes in the hen-cage floor on two sides of an axis. A dust bath formed with a slope corresponding to the slope of the hen-cage floor may stand well and stably placed on such a typical hen-cage floor. Further, having a slope in the floor of the dust bath is advantageous because it will counteract an accumulation of all the substrate in the middle of the floor of the dust bath, for example. The design will typically lead to a greater part of the substrate settling at the bordering surface of the dust bath, thereby increasing the accessibility, for example for pecking, to poultry which are outside the dust bath. The slope will also help to make eggs that are possibly laid in the dust bath roll down towards the bordering surface of the dust bath.

Further, as mentioned above, one or more portions of the bordering surface of the dust bath project(s) outwards from the floor of the pan at an angle of between 10° and 70° relative to a horizontal plane. When hens lay eggs, they have a tendency to try to move the eggs by using their beaks. If the egg meets an obstruction that prevents its movement, there is the risk of the hen's using its beak resulting in the egg breaking. This is not desirable. An angling of one or more portions of the bordering surface of the dust bath, as described above, has the purpose of making it possible for a hen to manage to move an egg out of the dust bath, without breaking it.

The mat of the dust bath may be perforated. A perforated mat will have the property of letting substrate through the perforations, so that substrate can stay between the floor of the dust bath and the mat. This property will enhance the ability of the mat to bind substrate in the dust bath.

The mat of the dust bath may have an extent which is smaller than the extent of the floor. A mat having a smaller extent than the floor of the dust bath can be placed in such a way that one or more areas along the border area of the floor of the dust bath is/are not covered by the mat.

The roof of the dust bath may be provided with an opening for the supply of substrate. Such an opening in the roof of the dust bath may be adapted to a supplying tool, for example a small spade of a design suitable for the purpose, and may facilitate and improve the efficiency of the work of supplying substrate to the dust bath.

At least one portion of the bordering surface of the dust bath may be arranged with a slit for the insertion of a fastening means. This fastening means has the purpose of securing the dust bath at a desired position in a hen cage, so that the dust bath stays positioned in the desired position. The fastening means may typically be a wire.

The pan and mat of the dust bath may be adapted for the mat to be secured to the floor of the dust bath. For example, there may be one or more holes in the floor of the dust bath, and/or in the bordering surface, and one or more holes in the mat for a fastening means to be inserted.

The roof of the dust bath may be movably suspended over the pan of the dust bath. It may be beneficial to avoid poultry sitting on the roof, to limit defecation into the pan of the dust bath, and a movable roof will be less attractive to sit on.

The pan of the dust bath may be formed with one or more at least partially open corners. Open corners could reduce the ability of the pan to retain substrate, but at the same time make it easier for hens that have laid eggs in the dust bath to get the eggs whole out of the pan. By an at least partially open corner is meant that a bordering surface projecting upwards from the border area of the floor does not project equally far up from the floor at a corner of the floor, seen in relation to the rest of the border area.

The pan of the dust bath may be provided with an opening, with the same function and design as mentioned above, placed in a portion of the border area that does not constitute a corner.

In a second aspect, the invention relates more specifically to the use of the dust bath. More particularly, the second aspect of the invention relates to filling substrate into the dust bath through an opening in the roof of the dust bath. When the method is used with a correctly formed dust bath, the filling fill be efficient and accurate, thereby contributing to reduced consumption of time and substrate.

In what follows, examples of preferred embodiments are described, which are visualized in the accompanying drawings, in which:
- Figure 1: shows the pan of the dust bath in one embodiment;
- Figure 2: shows the roof of the dust bath in one embodiment;
- Figure 3: shows how, in one embodiment, the roof can be assembled from two identical parts;
- Figure 4: shows a dust bath in one embodiment, with a roof and a mat, the roof being placed at a distance above the floor of the dust bath and the mat being placed on the floor of the dust bath;
- Figure 5: shows the pan of the dust bath in an alternative embodiment; and
- Figure 6: shows the pan of the dust bath in the same embodiment as in figure 5, viewed from the side.

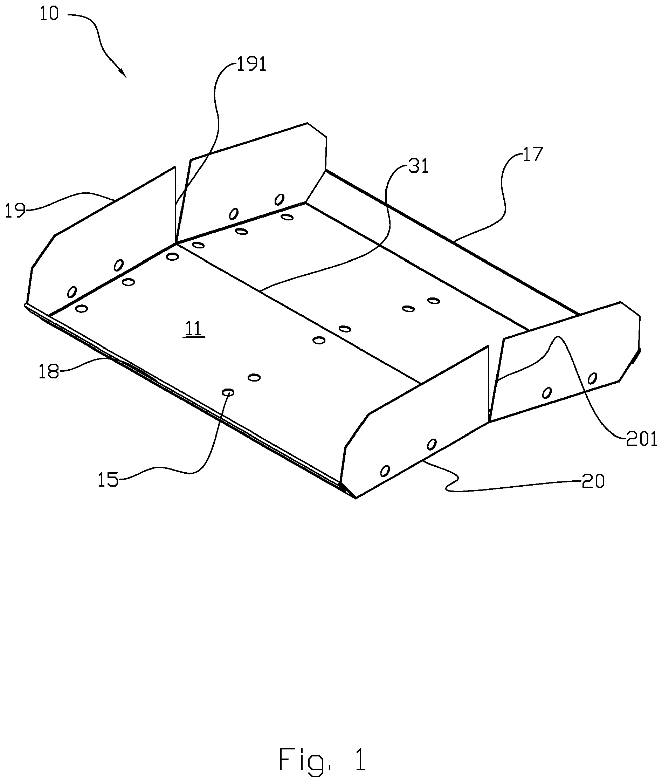

Figure 1 shows the pan 10 of the dust bath in one embodiment. The pan has a floor 11 arranged with a plurality of holes 15 for the attachment of a mat to the floor 11. Projecting from the border area of the floor 11, there are four bordering surfaces 17, 18, 19, 20. In what follows, two of these bordering surfaces 17, 18, 19, 20 will be called end faces 17, 18, whereas the other two bordering surfaces will be called side faces 19, 20. The end faces 17, 18 project outwards from the floor 11 of the pan 10 at an angle of about 45° relative to a horizontal plane. In other embodiments, this angle may be larger or smaller than said 45°. Each of the side faces 19, 20 are arranged with a slit 191, 201. The slits 191, 201 are arranged to receive one or more fastening means. The fastening means may typically be a wire which is extended across the floor 11 between the slits and secured to the underlying cage. The floor 11 is formed with opposite slopes on respective sides of a central axis 31.

The slopes of the floor 10 on respective sides of a central axis 31 are advantageous as they will help substrate to settle, to a greater degree, at the end faces 17, 18 and thus make the substrate more accessible for pecking by poultry being on the outside of the pan 10. Further, the slopes help eggs that are possibly laid within the pan 10 to easily roll or be rolled down to the end faces 17, 18. The angling of the end faces 17, 18 out from the floor 11 of the pan 10 is also very advantageous as it makes it easier for poultry to push eggs out of the pan 10 without breaking them.

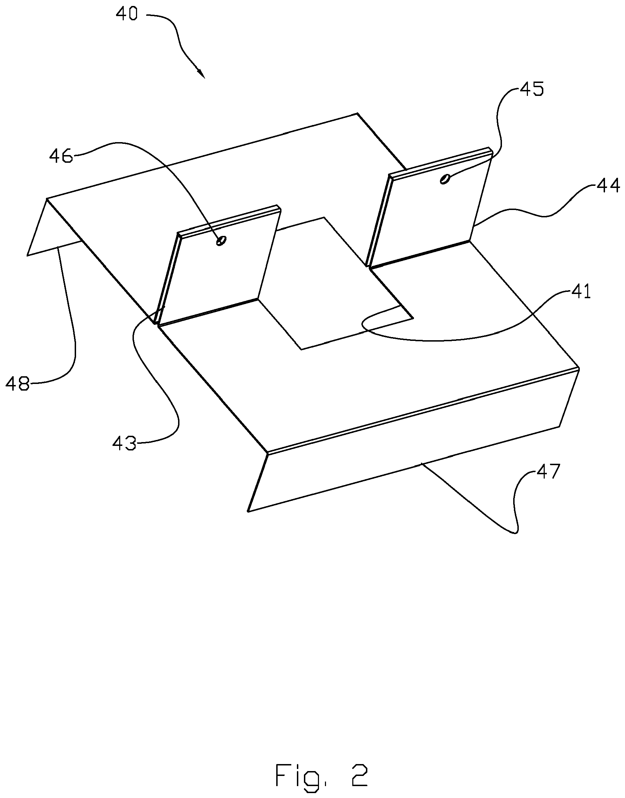

Figure 2 shows one embodiment of the roof 40 of the dust bath. The roof 40 is arranged with an opening 41, two middle portions 43, 44 projecting upwards, one hole 45, 56 in each middle portion 43, 44, and two end faces 47, 48 projecting downwards.

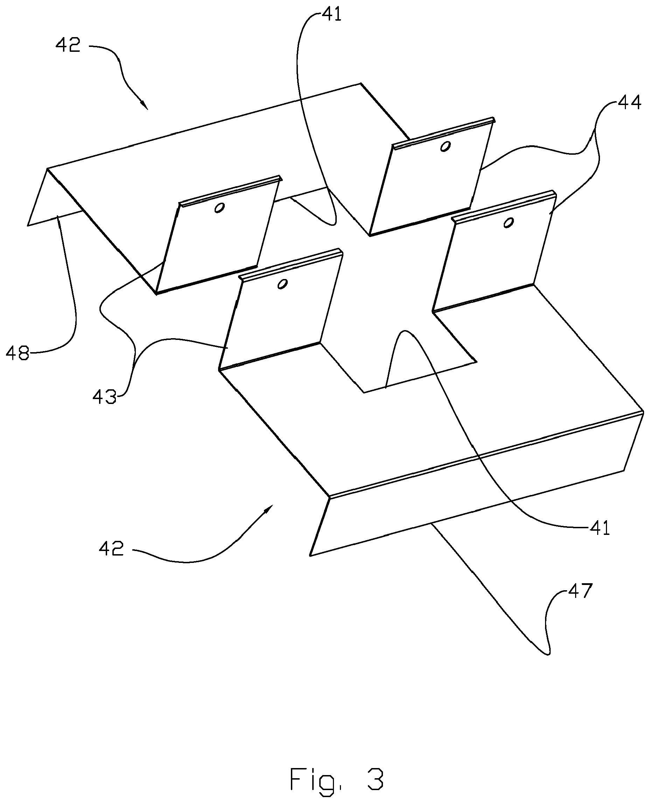

Figure 3 shows how the roof 40 in the embodiment shown in figure 2 may be made up of two identical parts 42. The two parts 42 may be attached to each other by means of fastening means which may be passed through the holes 45, 46. When the two parts 42 are put together, there will, because of the design, be a gap between the two parts 42 at the middle portions 43, 44. In this gap a suspension means (not shown), for example a wire, may be inserted, from which the roof 40 may be hung.

The roof 40 shown has several advantages. The opening 41 in the roof 40 allows easy filling of substrate into a dust bath. The gap that appears between the two parts 42 of the roof 40 makes it possible for the roof 40 to be suspended, and then in a way that enables the roof 40 to be tiltably suspended. A tiltable suspension will make staying on the roof 40 less attractive to poultry, which may be advantageous to avoid poultry defecating into the dust bath, among other things. Further, the end faces 47, 48 have an important function in that they help to limit spreading of substrate from the dust bath.

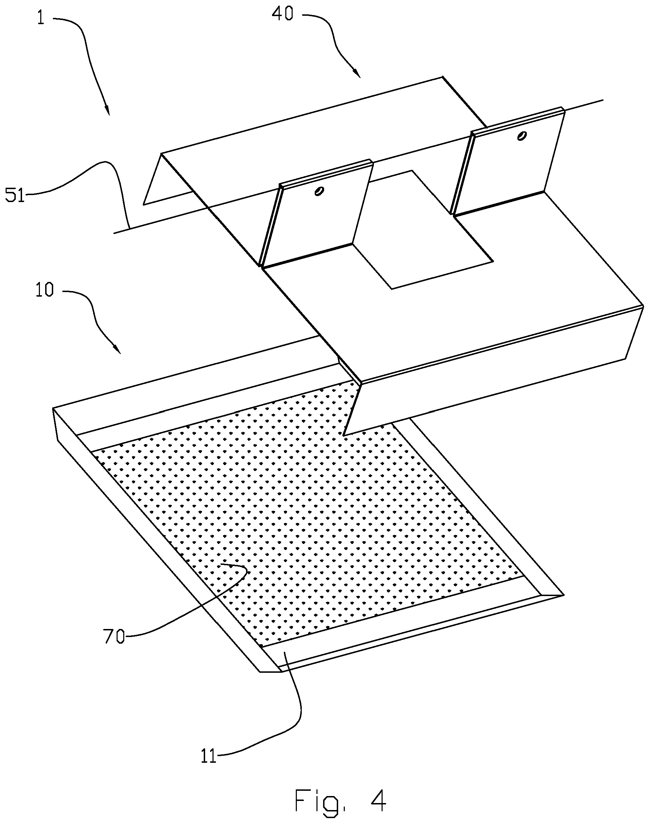

Figure 4 shows a principle drawing of a dust bath 1 according to the invention, in which the roof 40 is placed above a pan 10. The pan 10 has an alternative embodiment in relation to the pan 10 shown in figure 1. Further, a mat 70 placed on the floor 11 of the pan 10 is shown. Figure 4 shows how the pan 10, roof 40 and mat 70 of the dust bath 1 may be placed relative to each other, rather than details of the embodiment. Further, the figure shows a wire 51 from which the roof 40 may be hung. By adjusting the distance of the wire 51 to the floor 11 of the pan 10, it is possible to adjust the distance of the roof 40 to the floor 11.

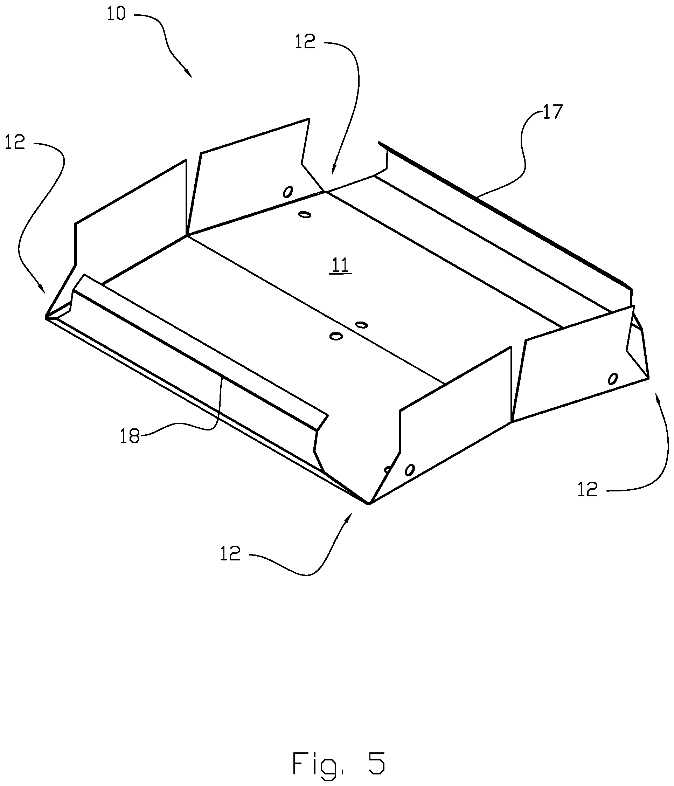

Figure 5 shows a further alternative embodiment of the pan 10 of the dust bath. In this embodiment, the pan 10 is provided with four open corners 12. The corners 12 are adapted to the sizes of eggs, so that eggs can pass through the corners 12.

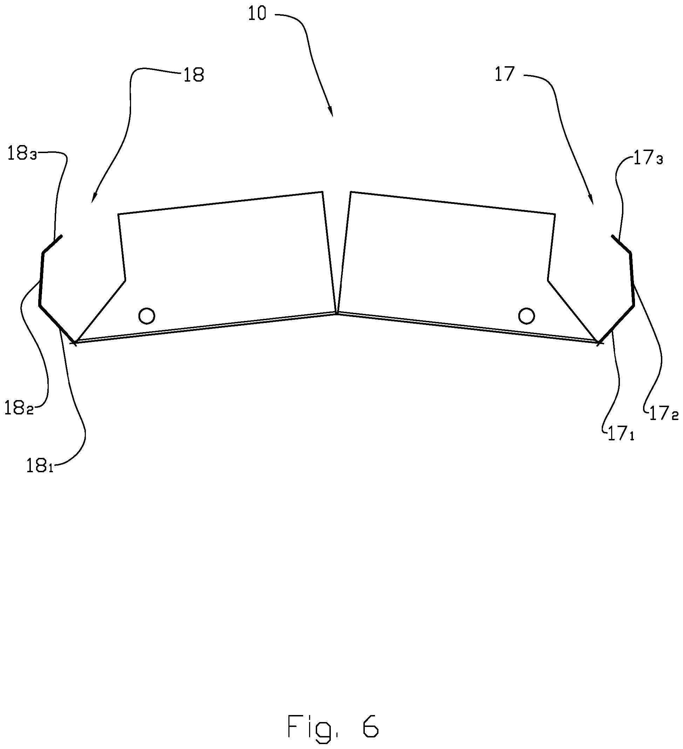

Figure 6 shows the same embodiment of the pan 10 of the dust bath as figure 5. Here, it is illustrated more clearly how the pan 10 is arranged with two end faces 17, 18 which, in a first portion 17₁, 18₁, project outwards from the floor 11 of the pan 10 at an angle of about 45° relative to a horizontal plane, before the end faces in a second portion 17₂, 18₂ stand substantially vertically to a horizontal plane, before the end faces, in a third portion 17₃, 18₃, project inwards towards the floor 11 of the pan at an angle of about 135° relative to a horizontal plane.

Otherwise the pan 10 in the embodiment illustrated in figures 5 and 6 bears similarity to the embodiment illustrated in figure 1.

It should be noted that all the above-mentioned embodiments illustrate the invention, but do not limit it, and persons skilled in the art may construct many alternative embodiments without departing from the scope of the attached claims. In the claims, reference numbers in parentheses are not to be regarded as restrictive.

The use of the verb "to comprise" and its different forms does not exclude the presence of elements or steps that are not mentioned in the claims. The indefinite article "a" or "an" before an element does not exclude the presence of several such elements.

The fact that some features are indicated in mutually different dependent claims does not indicate that a combination of these features cannot be used with advantage.

## Claims

1. A dust bath (1) for poultry, the dust bath (1) comprising a pan (10) with a floor (11), a bordering surface (17, 18, 19, 20) projecting upwards from the border area of the floor (11), a roof (40) placed at a distance from the floor (11) of the dust bath (1) and a mat (70) placed on the floor (11) of the dust bath (1), the dust bath (1) being **characterized in that**:
- at least one portion of the floor (11) of the pan (10) has a slope relative to a horizontal axis (31); and
- at least one portion of the bordering surface (17, 18, 19, 20) projects outwards from the floor (11) of the pan (10) at an angle of between 10° and 70° relative to a horizontal plane.

2. The dust bath (1) according to claim 1, wherein the mat (70) which is placed on the floor (11) of the dust bath (1) is perforated.

3. The dust bath (1) according to any one of the preceding claims, wherein the extent of the mat (70) is smaller than the extent of the floor (11).

4. The dust bath (1) according to any one of the preceding claims, wherein the roof (40) is provided with an opening (41) for the supply of substrate.

5. The dust bath (1) according to any one of the preceding claims, wherein at least one portion of the bordering surface (17, 18, 19, 20) of the dust bath (1) is arranged with a slit (191, 201) for the insertion of a fastening means.

6. The dust bath (1) according to any one of the preceding claims, wherein the dust bath (1) and the mat (70) are adapted for the mat (70) to be secured to the floor (11) of the dust bath (1).

7. The dust bath (1) according to any one of the preceding claims, wherein the roof (40) of the dust bath (1) is movably suspended above the pan (10) of the dust bath (1).

8. The dust bath (1) according to any one of the preceding claims, wherein the pan (10) is at least partially open in at least one portion of a bordering surface (17, 18, 19, 20).

9. A method for using a dust bath (1) according to any one of the preceding claims, **characterized in that** the substrate is filled into the dust bath (1) through an opening (41) in the roof (40) of the dust bath (1).
